# FASCICULE DE BREVET EUROPEEN

(11) **EP 1 853 823 B1**
(45) Date de publication et mention de la délivrance du brevet: **03.12.2008**
(21) Numéro de dépôt: 06709512.5
(22) Date de dépôt: 14.02.2006
(51) Int. Cl.: F04B 53/16, F16J 15/18

(54) **INSTALLATION DE COMPRESSION ALTERNATIVE D'UN GAZ, AVEC CONTROLE DU DEBIT DE FUITE DE CE DERNIER**
HUBKOLBENGASKOMPRIMIERUNGSANLAGE MIT GESTEUERTER LECKRATE
RECIPROCATING GAS COMPRESSION INSTALLATION WITH CONTROLLED LEAKAGE RATE

(30) Priorité: 17.02.2005 FR 0550446
(43) Date de publication de la demande: 14.11.2007
(73) Titulaire: L'AIR LIQUIDE, Société Anonyme pour l'Etude et l'Exploitation des Procédés Georges Claude, 75007 Paris (FR)
(72) Inventeur: FERAILLE, Daniel, 94340 Joinville-le-Pont (FR)
(74) Mandataire: Mercey, Fiona Susan
(86) Numéro de dépôt international: PCT/FR2006/050133
(87) Numéro de publication internationale: WO 2006/087493

(56) Documents cités:
- FR-A- 993 505
- FR-A- 1 042 989
- FR-A- 2 209 432
- GB-A- 554 094
- US-A- 3 834 715
- US-A- 4 005 580

## Description

La présente invention concerne de manière générale la compression d'un gaz dit utile, et donc d'intérêt, comme défini ci-après, avec un compresseur de type alternatif.

Plus précisément, au niveau de chaque cylindre d'une installation ou machine de compression, l'invention s'intéresse au contrôle du débit de fuite du gaz utile, existant nécessairement entre la tige du piston et le cylindre.

On rappellera en effet que, nonobstant l'existence de dispositifs d'étanchéité décrits ci-après, le jeu existant entre la tige de piston mobile alternativement en translation, et les joints d'étanchéité, génère un débit de fuite résiduel vers l'extérieur, aussi faible que possible, qu'il convient de contrôler, en particulier pour éviter son rejet, tel que dans l'atmosphère ambiante, ou l'environnement immédiat de la machine de compression.

Conformément à l'art antérieur, notamment le brevet FR 993.505, on connaît déjà une installation ou machine de compression alternative d'un gaz d'intérêt, comprenant classiquement :
- au moins un cylindre élémentaire déterminant une chambre de compression, pourvue d'au moins une entrée d'aspiration et d'au moins une sortie de refoulement du gaz utile comprimé, un piston coopérant avec le cylindre, avec une tige d'actionnement émergeant de ce dernier ;
- Un fond de cylindre comportant un passage pour la traversée, linéaire et alternative, de la tige de piston ;
- un dispositif d'étanchéité, du type presse-étoupe, entre la tige de piston et le fond de cylindre, vis-à-vis du gaz utile; classiquement, un tel dispositif comprend un empilement selon l'axe du piston, d'une part de garnitures annulaires d'étanchéité, et d'autre part d'au moins un anneau intercalaire, n'ayant aucune fonction d'étanchéité vis-à-vis de la tige de piston, agencé de diverses manières pour ménager un passage radial d'un interstice annulaire interne adjacent à la tige de piston, à au moins un alvéole périphérique externe, le cas échéant ménagé ou défini avec au moins une garniture annulaire adjacente, les garnitures et anneaux (x) intercalaire(s) étant serrés les uns contre les autres vers le cylindre par un presse-étoupe ; classiquement, chaque garniture intercalaire comprend une coupelle ménageant un logement pour un joint d'étanchéité, serré ou comprimé par des moyens appropriés prenant appui sur le bord interne de la coupelle, et assurant deux étanchéités, l'une contre la tige de piston, et l'autre contre le fond de la coupelle de la garniture immédiatement adjacente, ou une plaque intercalaire.
- un ou des orifices ménagés dans le fond de cylindre ou dans le corps du dispositif d'étanchéité, communiquant de manière étanche avec le ou les alvéoles périphériques externes des anneaux intercalaires respectivement.

A partir d'une telle construction, lors du fonctionnement de l'installation, compte tenu notamment de l'usure progressive des joints d'étanchéité, il s'établit un trajet gazeux de fuite du gaz utile, le long de la tige de piston, vers l'extérieur du cylindre, le gaz utile passant le long dudit trajet de la pression de refoulement à la pression extérieure au cylindre et au fond de cylindre. Classiquement, pour limiter la quantité de gaz utile échappant au dispositif d'étanchéité vers l'extérieur, un ou des anneaux intercalaires, en correspondance avec un ou des orifices ménagés dans le fond de cylindre ou dans le corps du dispositif d'étanchéité, étagés le long de la tige du piston, du côté antérieur, c'est-à-dire éloigné du cylindre, récupèrent le gaz de fuite, constitué par le gaz utile, à une pression inférieure à celle du refoulement, soit pour le recycler au refoulement de la chambre de compression, ou dans un cylindre précédent, soit l'évacuer à l'extérieur de l'installation.

Ceci étant, au fur et à mesure de l'usure des joints d'étanchéité (garnitures), le débit gazeux de fuite augmente, sans que le débit gazeux récupéré par les orifices précités puisse substantiellement augmenter, en raison de la perte de charge inhérente au circuit de recyclage ou d'évacuation du gaz de fuite à l'extérieur de l'installation. En conséquence, le débit gazeux résiduel du gaz utile passant à l'extérieur du cylindre au travers du dispositif d'étanchéité n'est jamais nul, et augmente graduellement avec l'usure des joints d'étanchéité.

Pour différentes raisons, notamment de sécurité et d'environnement, il est exclu de rejeter directement dans l'atmosphère ce débit gazeux résiduel.

Il est alors requis de construire l'installation de compression en sorte de disposer d'un carter ménageant entre le cylindre/ fond de cylindre et l'extérieur, grâce à une ou plusieurs cloisons de partition traversées chacune par la tige de piston, une ou plusieurs chambres intermédiaires, étanches, permettant chacune de recueillir le débit gazeux résiduel du gaz utile, et de le contrôler, en particulier quant à sa basse pression, mais supérieure à la pression atmosphérique, sa destination et son éventuel traitement. La seule ou dernière chambre intermédiaire peut, en particulier, servir à y disposer tout dispositif assurant la lubrification de la tige de piston.

Et à l'instar du dispositif d'étanchéité présent sur le fond de cylindre ou dans le corps du dispositif d'étanchéité, on prévoit sur chaque cloison interne ou intermédiaire, et éventuellement externe, un autre dispositif d'étanchéité ayant également la structure ou construction d'un presse-étoupe, et disposé à l'intérieur de la chambre intermédiaire considérée.

Ces différents dispositifs d'étanchéité constituent autant d'étages d'étanchéité en passant du cylindre vers l'extérieur.

Pour différentes raisons, notamment de prix ou de coût du gaz utile, il est essentiel de limiter le débit gazeux résiduel échappant au dispositif d'étanchéité du piston/. fond de cylindre. Pour ce faire, on a déjà décrit et proposé d'utiliser un gaz de barrage sous pression, par exemple de l'azote, injecté dans les différents étages d'étanchéité précédemment décrits, de la manière suivante :
- par injection du gaz de barrage, dans le dispositif d'étanchéité, dans la dernière ou seule chambre intermédiaire ;
- par injection du même gaz de barrage dans le dispositif d'étanchéité du fond de cylindre.
- le gaz de barrage circulant le cas échéant dans le dispositif d'étanchéité sur la cloison séparant deux chambres intermédiaires,
moyennant quoi le gaz du barrage se trouve récupéré dans une chambre, intermédiaire, en mélange avec le gaz utile s'échappant du cylindre/ fond de cylindre, et éventuellement avec le gaz de barrage évacué du dispositif d'étanchéité sur le cylindre/ fond de cylindre, pour être évacué de l'installation, par exemple vers une torchère.

En pratique, les injections/éjections précitées sont obtenues par construction, de la même manière que précédemment, chacune grâce à un anneau intercalaire dans le presse- étouffe en communication avec un orifice dans le fond de cylindre ou dans le corps du dispositif d'étanchéité.

On voit là la complexité de l'installation correspondante de compression. Par ailleurs, une partie du gaz utile demeure échapper au dispositif d'étanchéité du cylindre/ fond de cylindre et être perdue définitivement, puisque mélangée au gaz de barrage.

La présente invention a pour objet de remédier aux inconvénients précités.

Selon la présente invention, en coopération:
(a) on dispose d'une source d'un gaz d'isolement, sans intérêt, et sous pression
(b) l'empilement (du type presse-étoupe) du dispositif d'étanchéité du cylindre/fond de cylindre comprend deux anneaux intercalaires, l'un dit antérieur, à distance du cylindre, et l'autre, dit postérieur, rapproché du cylindre
(c) le fond de cylindre ou le corps du dispositif d'étanchéité présente deux orifices, l'un dit antérieur et l'autre dit postérieur, en communication, d'un côté avec les deux alvéoles périphériques externes des deux anneaux intercalaires, antérieur et postérieur, respectivement, et de l'autre côté, au moins pour l'orifice antérieur, avec la source du gaz d'isolement, moyennant quoi, en fonctionnement, on génère, à partir d'un interstice annulaire interne entre l'anneau intercalaire antérieur et la tige de piston, un trajet gazeux tubulaire d'isolement du gaz d'isolement, le long de la tige de piston, pratiquement d'une extrémité à l'autre du dispositif d'étanchéité.

Grâce à l'invention, dans le dispositif d'étanchéité du cylindre/ fond de cylindre, pour l'essentiel, on substitue le courant gazeux de fuite, constitué selon l'art antérieur par le gaz utile d'intérêt, par le trajet gazeux tubulaire d'isolement, stationnaire, constitué par le gaz d'isolement, sans intérêt.

Conséquemment, il n'est point besoin de récupérer une partie du courant gazeux de fuite, à un niveau intermédiaire du dispositif d'étanchéité, pour l'évacuer ou le recycler.

Et le gaz résiduel s'échappant du dispositif d'étanchéité est constitué pour l'essentiel par le gaz d'isolement, sans intérêt, lequel peut en particulier et en plus être choisi en raison de son innocuité par rapport à l'environnement, ou l'absence de danger qu'il présente vis-à-vis de la machine de compression ou de son environnement.

Par ailleurs, dans certains cas, grâce à l'invention, il devient possible de limiter le cloisonnement entre cylindre et carter à une seule chambre intermédiaire étanche.

Par "intérêt" et "sans intérêt", il faut comprendre de manière générale et relative, que le gaz dit utile, encore appelé "gaz de procédé", présente une valeur économique, par exemple oxygène, méthane, hydrogène, etc..., alors que le gaz dit d'isolement n'en présente pratiquement aucune, en dehors de son coût de mise à disposition, ou en tout cas présente une valeur économique moindre que celle du gaz dit utile, par exemple azote ou air.

Gaz utile et gaz d'isolement sont choisis, l'un en fonction de l'autre, étant entendu que le gaz d'isolement doit en outre répondre à d'autres considérations, parmi lesquelles :
- son caractère inerte et non réactif vis-à-vis du gaz utile, et/ou des différentes parties, dont huiles et graisses, de la machine de compression.
- son absence de dangerosité, ou inocuité, vis-à-vis de l'environnement, et des opérateurs, etc...; il s'agit par exemple d'un gaz non corrosif, ou non explosif, ou non comburant, ou non inflammable, ou non toxique.

La présente invention est maintenant décrite par référence au dessin annexé, dans lequel :
- la figure 1 représente schématiquement une installation ou machine de compression de type alternatif, incorporant un dispositif d'étanchéité selon l'invention ;
- la figure 2 représente, à titre d'exemple, un dispositif d'étanchéité selon l'invention, en place sur un cylindre/ fond de cylindre d'une machine selon figure 1.

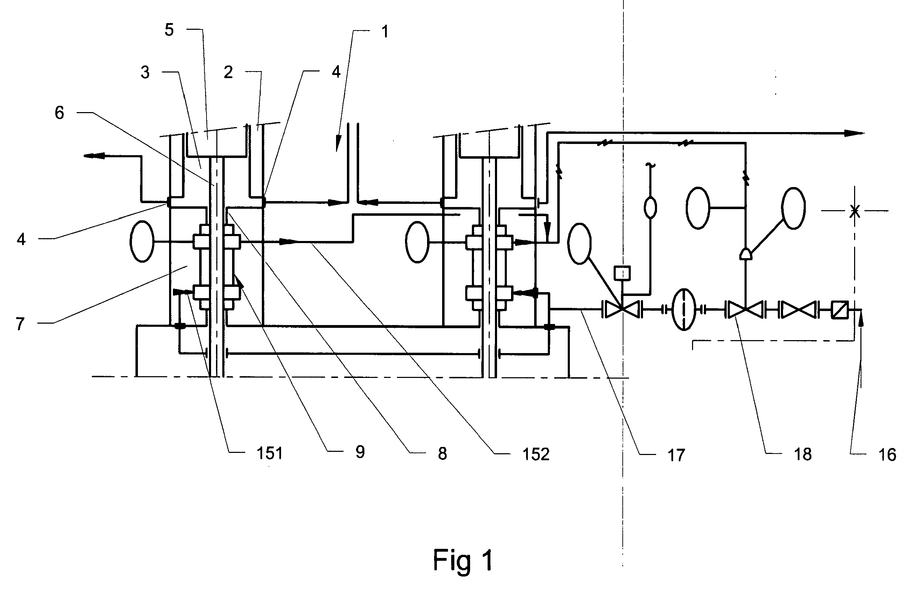

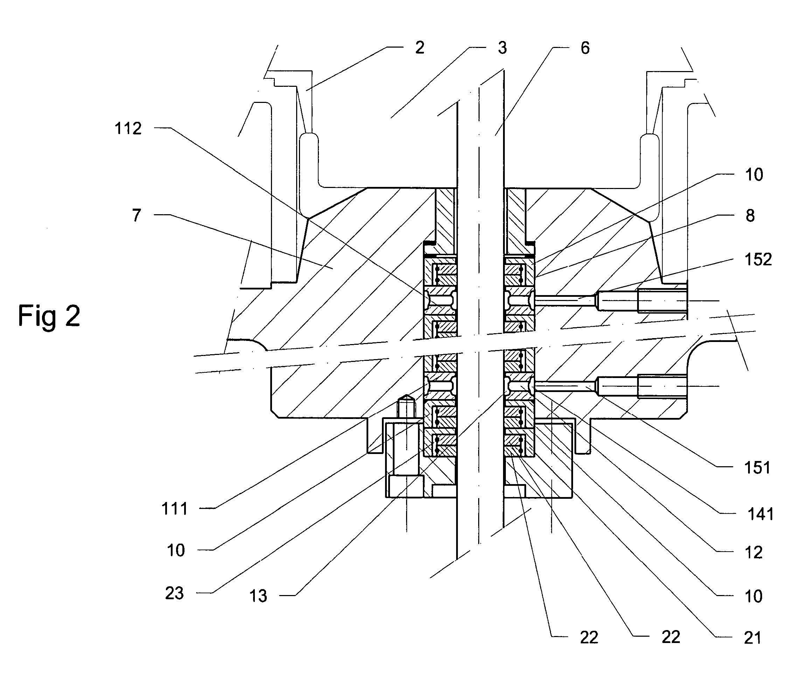

Conformément aux figures 1 et 2, une installation ou machine 1 de compression du type alternatif, ou gaz utile comprend :
- au moins un cylindre 2 déterminant une chambre de compression 3, pourvue d'au moins une entrée d'aspiration (non représentée) et d'au moins une sortie de refoulement 4 du gaz utile comprimé ; un piston 5 coopérant avec le cylindre 2, avec une tige 6 d'actionnement émergeant dudit cylindre ;
- un fond de cylindre 7 comportant un passage 8 pour la traversée en translation alternative, de la tige 6 de piston ;
- un dispositif d'étanchéité 9, du type presse-étoupe, entre la tige 6 de piston et le fond de cylindre 7, vis-à-vis du gaz utile comprenant, un empilement selon l'axe de la tige 6, d'une part d'une multiplicité de garnitures annulaires 10 d'étanchéité, et d'autre part de deux anneaux intercalaires 111, 112, agencés chacun pour ménager un passage radial 12 d'un interstice 13 annulaire interne, adjacent à la tige 6 de piston, à au moins un alvéole 141 ou 142 périphérique externe, adjacent à la face interne du passage 8 dans le fond de cylindre ou dans le corps du dispositif d'étanchéité 7 ;
- deux orifices 151 et 152 ménagés dans le fond de cylindre ou dans le corps du dispositif d'étanchéité 7, communiquant de manière étanche avec les alvéoles périphériques externes des anneaux intercalaires 111 et 112 respectivement du dispositif d'étanchéité 9.

Comme représenté à la figure 2, chaque garniture annulaire 10 d'étanchéité comprend une coupelle 21 ménageant un logement pour un joint unique d'étanchéité ou deux joints d'étanchéité 22 superposés, serrés ou comprimés par des moyens appropriés, en l'occurrence des ressorts annulaires ou axiaux 23 prenant appui sur une surface de la coupelle 21. Ces joints d'étanchéité 22 assurent en pratique deux étanchéités, l'une contre la tige 6 de piston, l'autre contre le fond de la coupelle 21 de la garniture 10 immédiatement adjacente, ou une plaque intercalaire correspondante.

Conformément à la présente invention, et comme dit plus haut, en coopération,
(a) on dispose d'une source 16 d'un gaz d'isolement, sans intérêt, et sous pression ;
(b) l'empilement du dispositif d'étanchéité 9 comprend les deux anneaux intercalaires 111, 112, l'un 111 dit antérieur, à distance du cylindre 2, et l'autre 112 dit postérieur rapproché dudit cylindre ;
(d) en correspondance, le fond de cylindre ou le corps du dispositif d'étanchéité 7 présente les deux orifices 151 et 152, l'un 151 dit antérieur, et l'autre 152 dit postérieur, ménagés en communication, d'un côté avec les deux alvéoles 141, 142, périphériques externes, des deux anneaux intercalaires 111 et 112 respectivement, dits antérieur et postérieur, et de l'autre côté, au moins pour l'orifice antérieur 151, avec la source 16 du gaz d'isolement sous pression.

En conséquence, en fonctionnement, grâce aux dispositions précitées, on génère, à partir de l'interstice annulaire interne 13 existant entre la tige 6 de piston et l'anneau intercalaire 111, un trajet gazeux tubulaire d'isolement, constitué pour l'essentiel par le gaz d'isolement, le long de la tige 6 de piston, pratiquement d'une extrémité à l'autre du dispositif d'étanchéité 9.

Comme montré par la figure 1, l'installation comprend en outre un circuit 17 d'alimentation, communiquant à partir de la source 16 du gaz d'isolement, avec l'orifice antérieur 151 précité, et une vanne 18 de contrôle de la pression du trajet gazeux d'isolement précité, assujettie à la pression existant à la sortie de l'orifice postérieur 152 précité.

Préférentiellement, la pression gazeuse dans le trajet gazeux d'isolement est régulée à une valeur inférieure à la pression d'aspiration dans la chambre de compression 3, et ce pour limiter le passage du gaz d'isolement vers le cylindre 2.

## Revendications

1. Installation (1) de compression alternative d'un gaz utile, comprenant :
- au moins un cylindre (2) déterminant une chambre de compression (3) pourvue d'au moins une entrée d'aspiration d'au moins une sortie de refoulement (4) du gaz utile comprimé ; un piston (5) coopérant avec le cylindre, avec une tige (6) d'actionnement émergeant de ce dernier ;
- Un fond de cylindre (7) comportant un passage (8) pour la traversée, linéaire et alternative, de la tige de piston ;
- un dispositif d'étanchéité (9), du type presse-étoupe, entre la tige (6) de piston et le fond de cylindre (7), vis-à-vis du gaz utile, comprenant un empilement selon l'axe de la tige (6), du type presse-étoupe, d'une part d'une multiplicité de garnitures annulaires (10) d'étanchéité, et d'autre part d'au moins un anneau (111, 112) intercalaire agencé pour ménager un passage radial (12) d'un interstice(13) annulaire interne adjacent à la tige (6) de piston, à au moins un alvéole périphérique (141, 142) externe, adjacent à la face interne du passage (8) dans le fond de cylindre ou dans le corps du dispositif d'étanchéité (7) ;
- au moins un orifice (151, 152) ménagé dans le fond de cylindre ou dans le corps du dispositif d'étanchéité (7), communiquant de manière étanche avec l'alvéole du dispositif d'étanchéité ;
**caractérisé en ce que,** en coopération,
(a) on dispose d'une source (16) d'un gaz d'isolement, sans intérêt ou en tout cas présentant une valeur économique moindre que celle du gaz utile, et sous pression
(b) l'empilement du dispositif d'étanchéité comprend deux anneaux intercalaires (111, 112), l'un (111) antérieur à distance du cylindre, et l'autre (112) postérieur rapproché dudit cylindre
(c) le fond de cylindre ou le corps du dispositif d'étanchéité (7) présente deux orifices, antérieur (151) et postérieur (152), ménagés en communication, d'un côté avec deux alvéoles (141, 142) périphériques externes des deux anneaux intercalaires, antérieur et postérieur, respectivement, et de l'autre côté, au moins pour l'orifice antérieur (151), avec la source (16) du gaz d'isolement, en sorte de générer, à partir d'un interstice annulaire interne (13) un trajet gazeux tubulaire d'isolement du gaz d'isolement, le long de la tige (6) de piston, pratiquement d'une extrémité à l'autre du dispositif d'étanchéité (9).

2. Installation selon la revendication 1, **caractérisée en ce qu'**elle comprend un circuit (17) d'alimentation communiquant à partir de la source (16) du gaz d'isolement avec l'orifice antérieur (151), et une vanne (18) de contrôle de la pression du trajet gazeux d'isolement, assujettie à la pression existant à la sortie de l'orifice postérieur (152).

3. Installation selon la revendication 1, **caractérisée en ce que** la pression gazeuse du trajet gazeux d'isolement est régulée à une valeur inférieure à la pression d'aspiration dans la chambre de compression (3).

## Claims

1. Reciprocating compression installation (1) for compressing a useful gas, comprising:
- at least one cylinder (2) determining a compression chamber (3) provided with at least one intake and at least one outlet (4) for the compressed useful gas; a piston (5) collaborating with the cylinder, with an operating rod (6) emerging therefrom;
- a cylinder end (7) comprising a passage (8) through which the piston rod can pass in a linear and reciprocating manner;
- a sealing device (9), of the stuffing-box type, sealing between the piston rod (6) and the cylinder end (7), with respect to the useful gas, comprising a stack along the axis of the rod (6), of the stuffing-box type, of, on the one hand, a multitude of annular packings (10) and, on the other hand, at least one insert ring (111, 112) designed to form a radial passage (12) from an internal annular gap (13) adjacent to the piston rod (6) to at least one external peripheral cavity (141, 142) adjacent to the internal face of the passage (8) in the cylinder end or in the body of the sealing device (7);
- at least one port (151, 152) formed in the cylinder end or in the body of the sealing device (7) and communicating in a sealed manner with the cavity of the sealing device;
**characterized in that,** in collaboration:
(a) there is a source (16) of insulating gas, which is not of interest or in any case has a lower economic value than the useful gas, but is under pressure;
(b) the stack of the sealing device comprises two insert rings (111, 112), one of them, the anterior ring (111), some distance from the cylinder, and the other, the posterior ring (112), closest to said cylinder;
(c) the cylinder end or the body of the sealing device (7) has two ports, an anterior port (151) and a posterior port (152), which are formed in communication, on one side, with two external peripheral cavities (141, 142) of the two insert rings, namely the anterior and posterior rings respectively, and, on the other side, at least in the case of the anterior port (151), with the source (16) of insulating gas so as to generate, from an internal annular gap (13), a tubular insulating gas path for the insulating gas, along the piston rod (6), practically from one end of the sealing device (9) to the other.

2. Installation according to Claim 1, **characterized in that** it comprises a supply circuit (17) communicating, from the source (16) of insulating gas, with the anterior port (151), and a control valve (18) for controlling the pressure of the insulating gas path, dependent on the pressure obtaining at the outlet of the posterior port (152).

3. Installation according to Claim 1, **characterized in that** the gas pressure of the insulating gas path is set to a value lower than the intake pressure at which gas is let into the compression chamber (3).

## Patentansprüche

1. Hubkolbenkomprimierungsanlage (1) für ein Arbeitsgas, die Folgendes umfasst:
- mindestens einen Zylinder (2), der eine Druckkammer (3) definiert, die mit mindestens einem Ansaugeingang und mindestens einem Förderausgang (4) des komprimierten Arbeitsgases versehen ist; wobei ein Kolben (5) mit dem Zylinder zusammenwirkt und eine Betätigungsstange (6) aus dem Zylinder hervortritt;
- einen Zylinderboden (7), der einen Durchgang (8) für das lineare und hin und her gehend erfolgende Durchqueren der Kolbenstange aufweist;
- eine Stopfbuchsen-Dichtungsvorrichtung (9) zwischen der Kolbenstange (6) und dem Zylinderboden (7) gegenüber dem Arbeitsgas, die eine Stopfbuchsenpackung entlang der Achse der Stange (6) einerseits einer Vielzahl von ringförmigen Dichtungselementen (10) und andererseits mindestens eines Zwischenrings (111, 112) aufweist, der zur Ausbildung eines radialen Durchgangs (12) mit einem ringförmigen inneren Zwischenraum (13) neben der Kolbenstange (6) zu mindestens einer Außenumfangsöffnung (141, 142) neben der Innenfläche des Durchgangs (8) im Zylinderboden oder im Dichtungsvorrichtungskörper (7) angeordnet ist;
- mindestens einen im Zylinderboden oder im Dichtungsvorrichtungskörper (7) ausgebildeten Durchbruch (151, 152), der abgedichtet mit der Öffnung der Dichtungsvorrichtung in Verbindung steht;
**dadurch gekennzeichnet, dass** in Kombination:
(a) eine Quelle (16) eines druckbeaufschlagten Isoliergases ohne Interesse, oder das in jedem Fall einen geringeren wirtschaftlichen Wert als das Arbeitsgas aufweist, angeordnet wird;
(b) die Dichtungsvorrichtungspackung zwei Zwischenringe (111, 112) umfasst, einen vorderen (111) vom Zylinder entfernt und einen hinteren (112) nahe dem Zylinder,
(c) der Zylinderboden oder der Dichtungsvorrichtungskörper (7) zwei Durchbrüche aufweist, einen vorderen (151) und einen hinteren (152), die in Verbindung einerseits mit zwei Außenumfangsöffnungen (141, 412) der beiden Zwischenringe, des vorderen bzw. des hinteren, und andererseits, zumindest für die vordere Öffnung (151), mit der Isoliergasquelle (16) ausgebildet sind, um von einem inneren ringförmigen Zwischenraum (13) aus eine röhrenförmige Isoliergasbahn des Isoliergases entlang der Kolbenstange (6), praktisch von einem Ende der Dichtungsvorrichtung (9) zum anderen zu erzeugen.

2. Anlage nach Anspruch 1, **dadurch gekennzeichnet, dass** sie einen Versorgungskreis (17), der von der Isoliergasquelle (16) aus mit dem vorderen Durchbruch (151) in Verbindung steht, und ein Ventil (18) zur Steuerung des Drucks der Isoliergasbahn, das dem am Ausgang des hinteren Durchbruchs (152) herrschenden Druck zugeordnet ist, umfasst.

3. Anlage nach Anspruch 1, **dadurch gekennzeichnet, dass** der Gasdruck der Isoliergasbahn auf einen Wert eingestellt wird, der kleiner ist als der Ansaugdruck in der Druckkammer (3).
